# DEMANDE DE BREVET EUROPEEN

(11) **EP 0 753 925 A2**
(43) Date de publication de la demande: **15.01.1997**
(21) Numéro de dépôt: 96401511.9
(22) Date de dépôt: 09.07.1996
(51) Int. Cl.: H02J 7/14

(54) **Dispositif d'alimentation électrique d'un véhicule automobile et procédés de commande d'un tel dispositif**

(30) Priorité: 13.07.1995 FR 9508519; 14.06.1996 FR 9607409
(71) Demandeur: Société Anonyme dite: REGIE NATIONALE DES USINES RENAULT, 92109 Boulogne Billancourt (FR)
(72) Inventeur: Lamartinie, Elsa, 75011 Paris (FR); Bouteraon, Alain, 78170 La Celle St Cloud (FR); Huguet, Patrick, 78500 Sartrouville (FR); Delaveau, François, 78760 Jouars Pontchartrain (FR); Duval, Hervé, 78400 Chatou (FR)
(74) Mandataire: Fernandez, Francis Lionel

(57) **Abrégé**

L'invention concerne un dispositif d'alimentation des charges électriques d'un véhicule automobile à moteur, comprenant une batterie de démarrage connectée au démarreur du moteur, une batterie de service, un alternateur et un système de gestion de charge reliant les deux batteries et l'alternateur aux charges électriques du véhicule, caractérisé en ce que le système de gestion de charge (6) est constitué par une combinaison d'au plus deux interrupteurs parmi trois (T1, T2, T3), dont le premier (T1) relie la batterie de démarrage (2) et des charges moteur (50), dont le second (T2) relie les charges moteur (50) et l'alternateur (4), et dont le troisième (T3) relie l'alternateur (4) et la batterie de service (3) qui est connectée de plus aux charges de service (51).

## Description

L'invention concerne un dispositif d'alimentation électrique d'un véhicule automobile à moteur thermique, que ce soit un véhicule de tourisme, un véhicule industriel ou un véhicule utilitaire, et des procédés de commande d'un tel dispositif.

Les organes électriques d'un véhicule automobile sont alimentés électriquement par un accumulateur d'énergie électrique tel qu'une batterie, dont la taille, la masse et le coût augmentent avec l'intensité électrique nécessaire au fonctionnement de ces organes. Actuellement, une batterie répond à deux utilisations :
- l'alimentation du démarreur du moteur, qui requiert un fort courant, plusieurs centaines d'ampères, pendant peu de temps, soit quelques secondes ;
- l'alimentation des charges électriques, moteur arrêté comme moteur tournant, qui requièrent des courants moins élevés, de quelques dizaines d'ampères, mais pendant une durée plus longue. Le moteur étant arrêté, ces charges consommatrices d'électricité en mode veille, correspondent à la montre électronique, aux circuits de mémorisation de la position des sièges, à l'alarme ou encore au préchauffage d'un moteur diesel. Le moteur étant en marche, il peut arriver que l'alternateur fournisse un courant insuffisant aux charges électriques, de sorte que la batterie doit compenser.

Il est parfois difficile, pour concevoir une telle batterie, de concilier les exigences rappelées ci-dessus avec une masse et un volume raisonnables pour le véhicule automobile.

Une solution connue à ce problème consiste à remplacer l'unique batterie actuelle par deux batteries distinctes, dont l'une dite batterie de démarrage est dédiée au démarreur du moteur et l'autre dite batterie de service est dédiée à l'alimentation des charges électriques du véhicule, ces deux batteries étant séparées par un système de gestion de charges comprenant un ensemble d'interrupteurs commandables.

Le brevet allemand DE-A-4.028.242 décrit une architecture à deux batteries, séparées par au moins un interrupteur qui permet de les déconnecter. Selon la stratégie de pilotage de cet interrupteur, il est toujours ouvert, quel que soit l'état de charge des batteries lors du démarrage et, dans le cas du moteur tournant, il est possible de déconnecter la batterie de service et certaines charges de service du reste du réseau.

Dans le brevet allemand DE-A-4.138.943, est décrite une architecture électrique équipée d'un ou deux interrupteurs, dont l'un est un transistor de puissance. Les charges moteur sont connectées à l'une ou l'autre batterie. Un inconvénient de cette solution tient au caractère unidirectionnel de cet interrupteur qui empêche la batterie de démarrage d'alimenter les charges de service lorsque la batterie de service est déchargée.

La présente invention a pour but de remédier aux inconvénients précités en proposant un dispositif d'alimentation des charges électriques d'un véhicule automobile à moteur thermique à la fois simple et économique et qui limite la chute de tension sur le réseau quand il est en dévers, c'est-à-dire quand l'alternateur ne peut fournir le courant nécessaire à son fonctionnement normal, en autorisant la batterie de démarrage à soutenir la batterie de service, tant que son état de charge reste suffisant pour assurer le démarrage suivant.

Le dispositif d'alimentation des charges électriques d'un véhicule automobile à moteur thermique selon l'invention comprend un premier accumulateur d'énergie électrique dit batterie de démarrage assurant le démarrage du moteur, un second accumulateur d'énergie électrique dit batterie de service distincte de la première, un alternateur relié au moteur destiné à la charge des deux batteries associées à des moyens de mesure de leur état de charge, et un système de gestion de charge reliant les deux batteries et l'alternateur aux charges électriques du véhicule.

Selon l'invention, le dispositif d'alimentation des charges électriques est caractérisé en ce que les charges électriques du véhicule sont réunies en une pluralité de groupes distincts, chacun des groupes étant destiné à être alimenté électriquement de façon privilégiée par l'une des deux batterie et en ce que le système de gestion de charge est constitué par une combinaison d'au plus deux interrupteurs.

Selon une caractéristique du dispositif d'alimentation des charges électriques du véhicule, ces deux interrupteurs sont choisis parmi trois. Le premier relie la première batterie et des charges moteur représentant les éléments électriques assurant le fonctionnement du moteur et la sécurité du véhicule. Le second relie les charges moteur et l'alternateur. Le troisième relie l'alternateur et la seconde batterie qui est connectée de plus aux charges de service, représentant tous les autres éléments électriques du véhicule.

Ainsi, les charges utiles au bon fonctionnement du moteur et les charges nécessitant une alimentation de bonne qualité sont connectées à la batterie de démarrage, en cas de dévers. La batterie de service est alors soulagée et un niveau de tension optimal est assuré aux bornes des charges. L'invention permet également d'alimenter avec un meilleur niveau de sécurité des charges qui supportent mal des coupures de courant ou les fortes variations de tension, comme les calculateurs d'injection ou d'allumage par exemple. Grâce à l'invention, ce type d'organes sera en permanence connecté à une batterie capable de délivrer le courant nécessaire, sous un bon niveau de tension.

Un autre objet de l'invention est un procédé de commande d'un dispositif d'alimentation des charges électriques d'un véhicule automobile à moteur, caractérisé en ce que les charges moteur sont connectées en permanence à une des deux batteries, et en ce que, lors du fonctionnement du dispositif en phase de dévers pendant laquelle la seconde batterie dite de service se décharge, la première batterie dite de démarrage peut alimenter les charges moteur.

Selon une première variante, l'objet de l'invention est un dispositif d'alimentation électrique d'un véhicule équipé d'un moteur thermique du type comprenant deux accumulateurs, un premier accumulateur dit batterie de démarrage destiné à alimenter le démarreur du moteur et un second accumulateur dit batterie de service destiné à alimenter les autres récepteurs électriques du véhicule, un contacteur de démarrage actionné par la clef de contact, et un système gestion de charge opérant la connexion et la déconnexion des deux batteries entre elles suivant leur état de charge respectif et les besoins en énergie des différents récepteurs électriques du véhicule.

Le contacteur de démarrage possède une borne d'entrée reliée à la batterie de service et au moins une première borne de sortie alimentant les autres récepteurs électriques et une seconde borne de sortie alimentant notamment un interrupteur à solénoïde contrôlant l'alimentation électrique du démarreur.

Selon l'invention, un tel dispositif d'alimentation électrique est caractérisé en ce que le système de gestion de charge coopère avec des moyens de branchement électromagnétiques et de mesure de la tension permettant la mesure successive de la tension aux bornes de la batterie de démarrage et de la batterie de service lorsque le contacteur de démarrage connecte la borne d'entrée à la seconde borne de sortie. Ces moyens permettent d'opérer la connexion de la batterie de démarrage à la batterie de service lorsque cette dernière se trouve être déchargée et permettre ainsi le démarrage du moteur.

Selon une autre caractéristique de cette première variante du dispositif d'alimentation électrique objet de la présente invention, le système de gestion de charge coopère avec des moyens de contrôle opérant cette connexion pendant une temporisation prédéterminée.

Selon une autre caractéristique de la première variante du dispositif d'alimentation électrique objet de la présente invention, le système de gestion de charge coopère avec des moyens de contrôle opérant cette connexion après que la seconde borne de sortie du contacteur de démarrage ait été déconnectée de la borne d'entrée.

Selon une autre caractéristique de la première variante du dispositif d'alimentation électrique objet de la présente invention, ces moyens de branchement sont formés par un relais électromagnétique comportant une borne d'entrée reliée à la seconde borne de sortie du contacteur, une première borne de sortie alimentant l'interrupteur à solénoïde du démarreur, une seconde borne de sortie reliée à la batterie de démarrage, une palette mobile apte à connecter sélectivement la borne d'entrée à l'une ou l'autre des bornes de sorties sous l'action antagoniste de moyens élastiques de rappel et d'une bobine destinée à être reliée à la batterie de service, les moyens de mesure de la tension étant alors reliés à la borne de sortie du relais connectée à la borne d'entrée lorsque la palette mobile n'est soumise qu'à l'action des moyens de rappel.

Selon une autre caractéristique de la première variante du dispositif d'alimentation électrique objet de la présente invention, la bobine du relais est reliée à la première borne du contacteur de démarrage.

Selon une autre caractéristique de la première variante du dispositif d'alimentation électrique objet de la présente invention, la seconde borne de sortie du relais est reliée à la batterie de démarrage par l'intermédiaire d'une résistance de valeur adaptée.

Selon une autre variante, l'objet de l'invention est un dispositif d'alimentation électrique d'un véhicule automobile à moteur thermique, comprenant une première batterie de démarrage assurant le démarrage du moteur, une seconde batterie de service, distincte de la première, un alternateur relié au moteur et destiné à la charge des deux batteries associées à des moyens de mesure de leur état de charge, un démarreur du moteur connecté en parallèle à au moins une des batteries, un système de gestion de charge reliant les deux batteries et l'alternateur à l'ensemble des charges électriques du véhicule, caractérisé en ce que:
- la batterie de démarrage est reliée à des charges, dites de démarrage, indispensables à l'utilisation du véhicule;
- la batterie de service est reliée à des charges dites de service, assurant le fonctionnement du moteur et la sécurité du véhicule;
- le système de gestion est constitué par deux interrupteurs bidirectionnels commandables, dont le premier relie les deux batteries et dont le second relie des charges électriques auxiliaires, correspondant aux fonctionnalités électriques de l'habitacle du véhicule, au dispositif d'alimentation.

Selon une autre caractéristique de cette seconde variante de l'invention, le premier interrupteur bidirectionnel commandable du système de gestion de charge relie la batterie de démarrage montée en parallèle avec le démarreur et les charges de démarrage, à la batterie de service montée en parallèle avec les autres éléments du dispositif.

Selon une autre caractéristique de cette seconde variante de l'invention, le premier interrupteur bidirectionnel commandable du système de gestion de charge montée relie la batterie de démarrage montée en parallèle avec les charges de démarrage, à la batterie de service montée en parallèle avec le démarreur et les autres éléments du dispositif.

On comprendra mieux les buts, aspects et avantages de la présente invention, d'après la description donnée ci-après de différentes mode de réalisation de l'invention, ces modes de réalisation étant donnés à titre d'exemples non limitatifs, en se référant notamment aux dessins annexés, dans lesquels :
- la figure 1 est le schéma d'un dispositif d'alimentation des charges électriques d'un véhicule automobile, selon l'invention ;
- la figure 2 est le schéma électrique général d'un dispositif d'alimentation selon l'invention ;
- les figures 3, 4 et 5 sont des schémas électriques d'un dispositif d'alimentation selon l'invention, comprenant un interrupteur ;
- les figures 6 et 7 sont des schémas électriques d'un dispositif d'alimentation selon l'invention, comprenant deux interrupteurs.
- la figure 8 est une vue schématique d'un dispositif d'alimentation des récepteurs électriques d'un véhicule automobile, selon la présente invention ;
- la figure 9 est le schéma électrique d'un dispositif d'alimentation selon une première variante de l'invention ;
- la figure 10 est une vue de détail du contacteur commandant notamment le fonctionnement du démarreur décrit sur la figure 9 ;
- les figures 11 et 12 sont les schémas électroniques de deux modes de réalisation d'une seconde variante du dispositif d'alimentation électrique d'un véhicule automobile, selon l'invention ;
- les figures 13, 15, 17 et 19 sont les courbes de variation de la tension aux bornes des charges de démarrage en fonction du temps, d'après les différents procédés de commande d'un dispositif d'alimentation électrique selon la seconde variante de l'invention ;
- les figures 14, 16, 18 et 20 sont les courbes de variation de la tension aux bornes des charges de service en fonction du temps, d'après les différents procédés de commande d'un dispositif d'alimentation électrique selon la seconde variante de l'invention.

Les éléments portant les mêmes références sur les différentes figures remplissent les mêmes fonctions en vue des mêmes résultats.

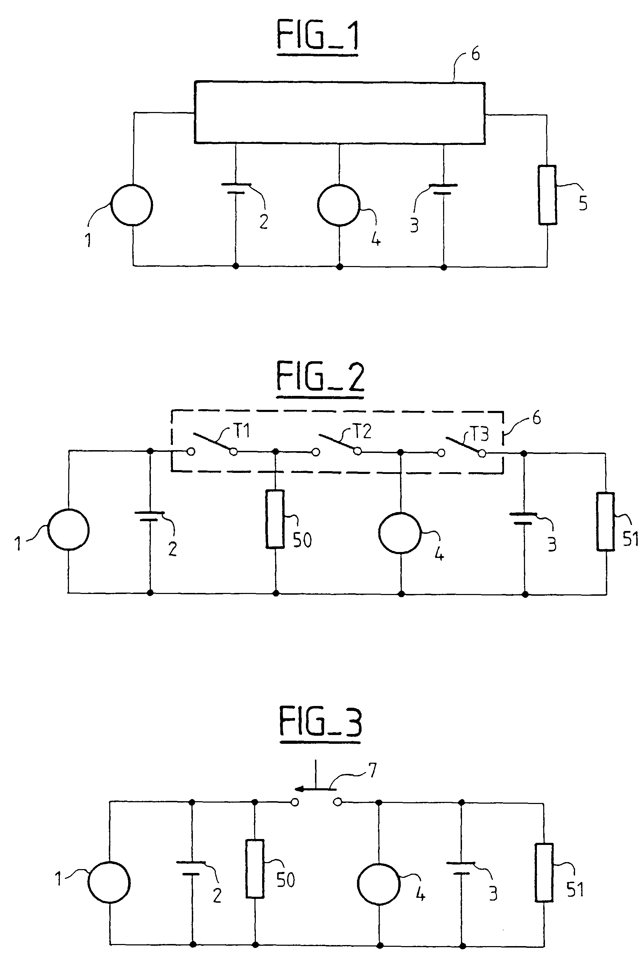

Selon l'invention, le dispositif d'alimentation des charges électriques d'un véhicule automobile à moteur doté d'un démarreur 1, comprend deux batteries distinctes 2 et 3, un alternateur 4 permettant d'alimenter les charges électriques 5 du véhicule et de recharger les batteries, et un système de gestion de charge 6 reliant ces batteries et cet alternateur aux charges, comme cela est représenté schématiquement sur la figure 1.

Les charges électriques d'un véhicule automobile sont de deux types:
- les charges dites moteur correspondant premièrement aux éléments électriques nécessaires d'une part au bon fonctionnement du moteur, comme les calculateurs d'allumage et d'injection ou le préchauffage du gasoil par exemple, et d'autre part à la limitation des émissions de polluants, comme une sonde lambda, et correspondant deuxièmement aux éléments dits de sécurité dont l'alimentation électrique doit être particulièrement fiable pour assurer réellement la sécurité du véhicule, comme le calculateur électronique et les actionneurs du système d'antiblocage des roues (A.B.S.) par exemple ;
- les charges dites de service qui représentent tous les autres éléments du véhicule devant être alimentés électriquement, comme les feux de croisement, de position, les dispositifs de soufflage d'air dans l'habitacle, la lunette arrière chauffante, etc.

Les charges moteur doivent être alimentées pendant la phase de démarrage du moteur, en même temps que le démarreur, et pendant la marche du véhicule, alors que les charges de service nécessitent une alimentation de puissance variable pendant la marche du véhicule épisodiquement ou continûment selon leurs fonctions.

Comme le montre la figure 2 qui est un schéma électrique général d'un dispositif selon l'invention, le démarreur 1 du moteur du véhicule est connecté à une première batterie 2 dite de démarrage. Les charges moteur 50 peuvent être alimentées électriquement soit grâce à la batterie de démarrage 2 par un premier interrupteur T1, soit grâce à l'alternateur par un second interrupteur T2. Les charges de service 51 sont reliées en parallèle à une seconde batterie 3 dite de service qui est connectée à l'alternateur par un troisième interrupteur T3.

En raison du fort courant appelé par le démarreur, la batterie de démarrage est préférentiellement placée près du démarreur, pour limiter la chute de tension dans les câbles de connexion. La batterie de service peut être placée soit sous le capot du véhicule, soit dans l'habitacle ou le coffre, selon les possibilités du véhicule, à condition de tenir compte de l'influence de cet emplacement sur l'acceptance de charge des batteries au moment du choix du mode de réalisation du dispositif selon l'invention et de son procédé de commande.

Le système de gestion des charges 6 est constitué par la combinaison d'au plus deux des trois interrupteurs T1, T2 et T3, avec comme caractéristique principale, que les charges moteur soient connectées en permanence à une des deux batteries, et que, lors du fonctionnement du réseau en phase de dévers pendant laquelle la batterie de service se décharge, la batterie de démarrage soit connectée aux charges moteur pour les alimenter, si son état de charge est supérieur à un seuil déterminé. L'information sur l'état de charge des batteries est donnée soit par des moyens de mesure de la tension, soit par des moyens de mesure du courant de charge ou de décharge et de la température des batteries.

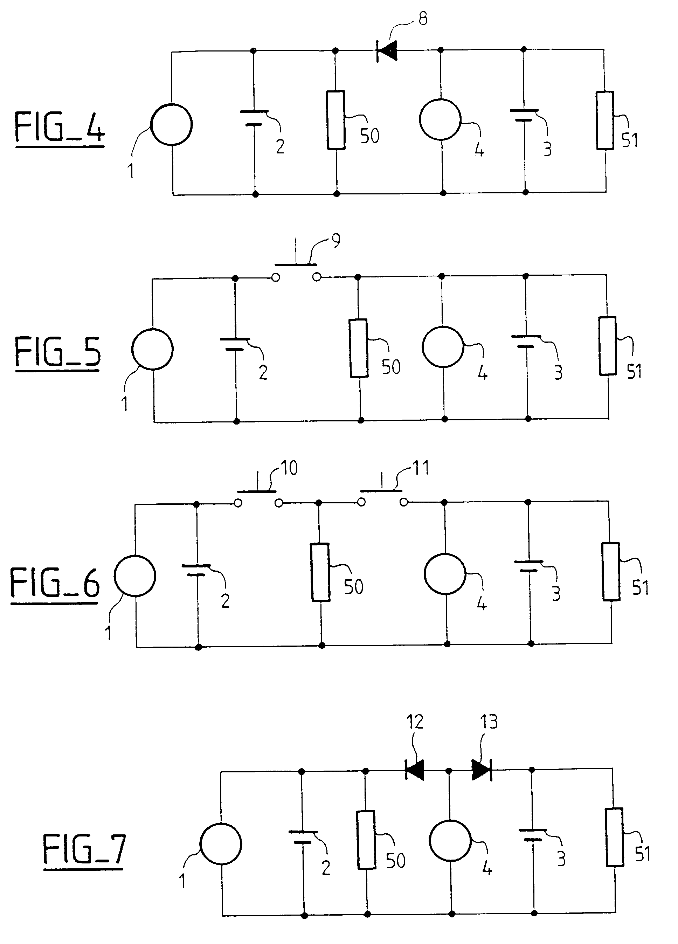

Plusieurs exemples de réalisation du dispositif selon l'invention remplissent ces conditions, notamment ceux des figures 3 et 4 qui comportent un seul interrupteur (T2) placé entre l'alternateur 4 et les charges moteur 50. Sur la figure 3, le démarreur 1, monté en parallèle à la batterie de démarrage 2 et aux charges moteur 50, est ainsi séparé de l'ensemble constitué par l'alternateur 4, la batterie de service 3 et les charges de service 51 par un interrupteur commandable et unidirectionnel 7 de type transistor. Le fonctionnement du dispositif commandé selon l'invention est le suivant :
- au démarrage, l'interrupteur 7 est ouvert pour que la batterie de service 3 ne fournisse pas de courant au démarreur, alimenté uniquement par la batterie de démarrage 2 calibrée à cet effet. Cependant, si la simple mesure de la tension de la batterie de démarrage indique sa décharge à la suite d'une panne d'un élément électrique du véhicule, la fermeture de l'interrupteur 7 est commandée pour permettre l'alimentation du démarreur 1 par la batterie de service 3;
- pendant la phase de fonctionnement du moteur, soit de charge et de décharge des batteries, l'interrupteur 7 est fermé en permanence pour que l'alternateur recharge les deux batteries;
- à l'arrêt du moteur, l'interrupteur 7 est ouvert, si la batterie de démarrage se décharge à la suite d'un défaut dans le circuit.

Cet exemple de réalisation a pour avantage tout d'abord de stabiliser la tension aux bornes des charges de service 51 lors du démarrage, et de plus, en mode veille, dans le cas où la batterie de démarrage est déchargée pour cause de panne, le démarrage peut être assuré par la batterie de service.

Dans le cas de la figure 4, l'interrupteur T2 est une diode 8 qui conduit le courant électrique de l'alternateur 4 à l'ensemble constitué par la batterie de démarrage 2 connectée en parallèle au démarreur 1 et aux charges moteur 50, les charges de service 51 en parallèle à la batterie de service 3 étant connectées à l'alternateur.

Le fonctionnement du dispositif ainsi réalisé est le suivant :
- au démarrage, la batterie de démarrage 2 fournit du courant au démarreur 1 et aux charges moteur 50. La batterie de service 3 alimente aussi les charges moteur et le démarreur par l'intermédiaire de la diode 8 ;
- en phase de charge des deux batteries 2 et 3 par l'alternateur 4, la différence d'acceptance de charge entre les deux batteries, due à la chute de tension aux bornes de la diode 8, est compensée en partie selon leurs emplacements par la chute de tension dans les câbles de la batterie de service et par l'influence de la température ambiante sur la charge des batteries ;
- en dévers, la batterie de démarrage 2 contribue à l'alimentation des charges moteur pour compenser le courant insuffisant fourni par l'alternateur, et la diode 8 empêche la décharge de cette batterie dans le reste du dispositif électrique ;
- à l'arrêt du moteur, si la batterie de service 3 est déchargée, à cause de feux restés allumés par exemple, la tension aux bornes de la batterie de démarrage 2 reste à un bon niveau, grâce à la diode 8 qui empêche la décharge de cette dernière.

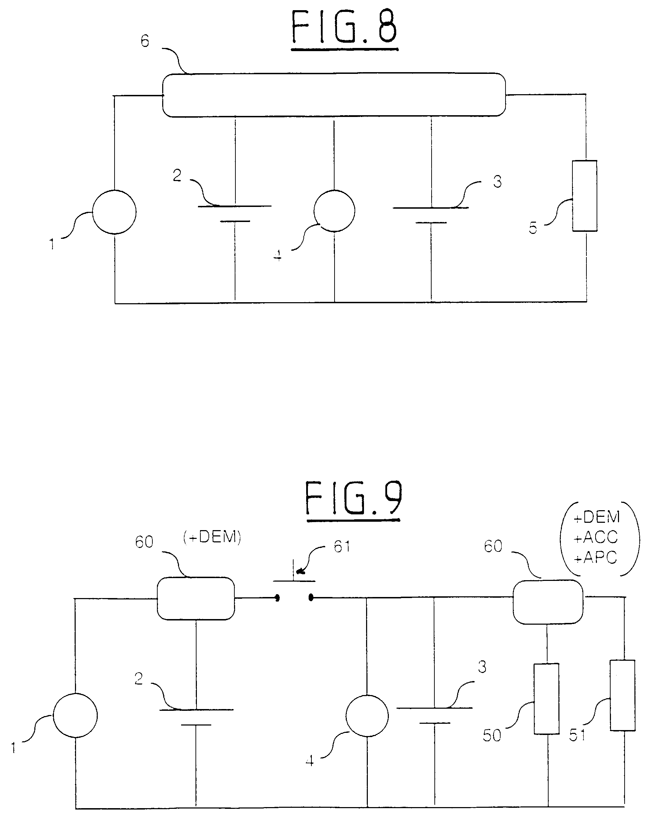

Selon un autre exemple de réalisation du dispositif selon l'invention représenté sur la figure 5, il comporte un seul interrupteur T1 reliant la première batterie dite de démarrage 2 aux charges moteur 50, cet interrupteur étant un relais bidirectionnel 9 commandable selon un procédé de commande, assurant le fonctionnement suivant :
- au démarrage, l'interrupteur 9 est ouvert. Mais, dans le cas où une des deux batteries est déchargée, l'interrupteur est fermé pour permettre le démarrage ;
- en charge, l'interrupteur 9 est fermé pour que l'alternateur 4 charge la batterie de démarrage 2. Quand son état de charge a atteint un niveau suffisant pour assurer le démarrage suivant, l'interrupteur 9 est ouvert ;
- en dévers, lorsque la batterie de service 3 débite du courant pour compléter celui de l'alternateur 4, l'interrupteur 9 est fermé afin que la batterie de démarrage 2 soutienne la batterie de service, à condition que l'état de charge de la batterie de démarrage soit supérieur à un seuil prédéterminé ;
- moteur arrêté, l'interrupteur 9 est ouvert pour préserver l'état de charge de la batterie de démarrage.

La figure 6 est un exemple de réalisation d'un dispositif d'alimentation selon l'invention, comprenant deux interrupteurs, un premier T1 reliant la batterie de démarrage 2 aux charges moteur 50 et un second T2 reliant les charges moteur et l'alternateur 4. Ces deux interrupteurs sont constitués par des relais commandables et bidirectionnels 10 et 11, fonctionnant de la façon suivante :
- au démarrage, l'interrupteur 10 est ouvert pendant que l'interrupteur 11 est fermé. Dans le cas où la batterie de service 3 est déchargée, cette combinaison est inversée pour permettre l'alimentation des charges moteur par la batterie de démarrage 2. Si, à la suite d'un défaut du système, la batterie de démarrage est déchargée, on commande la fermeture des deux interrupteurs pour permettre le démarrage à partir de la batterie de service ;
- en charge, les deux interrupteurs sont fermés pour autoriser la charge des deux batteries par l'alternateur. Quand l'état de charge de la batterie de démarrage est supérieur au seuil de charge suffisant pour assurer le prochain démarrage, l'interrupteur 10 s'ouvre ;
- en dévers, lorsque la batterie de service fournit du courant pour compléter celui délivré par l'alternateur, on commande la fermeture de l'interrupteur 10 et l'ouverture de l'interrupteur 11, tant que l'état de charge de la batterie de démarrage n'est pas inférieur au seuil prédéterminé assurant le prochain démarrage. Sinon la combinaison des interrupteurs est inversée ;
- à l'arrêt, l'interrupteur 10 est ouvert et l'interrupteur 11 est fermé.

Ce mode de réalisation est intéressant du fait que la batterie de démarrage n'alimente que les charges moteur et de sécurité, en cas de dévers, tant que son niveau de charge est suffisant, ne fournissant donc qu'un courant limité et gardant une tension assez élevée à ses bornes. La qualité de l'environnement électrique des charges moteur est ainsi particulièrement bonne. De plus, en cas de démarrage avec la batterie de service déchargée, celle-ci n'alimente que les charges moteur et ne fournit pas de courant au reste du dispositif.

La figure 7 est un autre exemple de réalisation d'un dispositif d'alimentation selon l'invention, comprenant deux interrupteurs, un premier T2 reliant les charges moteur et l'alternateur 4 et un second T3 reliant l'alternateur 4 aux charges de service 51. Ces deux interrupteurs sont constitués par des diodes, l'une 12 étant passante de l'alternateur 4 vers la batterie de démarrage 2 et l'autre 13 étant passante de l'alternateur vers la batterie de service 3, et fonctionnent de la façon suivante :
- au démarrage, la batterie de démarrage 2 fournit du courant au démarreur 1 et aux charges moteur 50, mais la diode 12 empêche la batterie de service 3 de fournir du courant au démarreur et aux charges qui lui sont connectées ;
- en charge, les deux diodes autorisent la charge des deux batteries par l'alternateur, et la chute de tension aux bornes des diodes est compensée par une élévation du seuil de régulation de l'alternateur ;
- en dévers, la batterie de démarrage 2 contribue à l'alimentation des charges moteur 50 et la diode 12 empêche cette batterie de se décharger dans le reste du dispositif ;
- moteur arrêté, la seconde diode 13 évite la décharge de la batterie de service 3 dans le dispositif, dans le cas où la batterie de démarrage 2 est déchargée à la suite d'une panne.

L'avantage de cette réalisation réside dans le fait que la batterie de service 3 ne participe pas au démarrage grâce à la diode 13, ce qui maintient stable la tension aux bornes du dispositif.

L'invention consiste en un dispositif d'alimentation très simple de réalisation et de fonctionnement, et d'un coût peu élevé. Les charges moteur sont en permanence connectées à une des deux batteries, et en dévers, la batterie de démarrage alimente les charges moteur quand la batterie de service se décharge.

Dans tous les exemples de réalisation de dispositifs d'alimentation précités, en fonction de l'emplacement des batteries dans le véhicule, une élévation du seuil de tension du régulateur de l'alternateur peut être prévue, afin de compenser la chute de tension aux bornes des interrupteurs, ou la chute de tension dans les câbles, ou encore la différence d'acceptance de charge des batteries due aux différences de température ambiante.

En se reportant aux figures 8 à 10, on a représenté une première variante de réalisation du dispositif d'alimentation électrique d'un véhicule automobile à moteur thermique selon l'invention.

En se reportant sur la figure 8 similaire à la figure 1 on voit, présenté de façon simplifiée, le circuit électrique d'un véhicule automobile à moteur thermique. Ce circuit comporte des accumulateurs électriques tels que des accumulateurs électrochimiques formant deux batteries distinctes 2 et 3 appelées respectivement batterie de démarrage et batterie de service et un générateur électromécanique ou alternateur 4 entraîné par le moteur. Ces appareils alimentent en courant électrique les différents récepteurs électriques du véhicule moteur à savoir : le démarreur 1 d'une part et, les autres récepteurs électriques que l'on peut répartir en récepteurs dits "moteur" et récepteurs dits "de service" 5, par l'intermédiaire d'un système de gestion 6.

Les récepteurs dits "moteur" correspondent aux différents appareillages électriques : moteurs, microprocesseurs, relais, inductances, résistances, transformateurs, etc., nécessaires au bon fonctionnement du moteur, tels que le système électronique de contrôle du moteur, la pompe à carburant, les électro-injecteurs de carburant, les bobines d'allumage (pour les moteurs à allumage commandé), le capteur de position vilebrequin, la sonde à oxygène, la pompe à air, etc.

Les récepteurs dits "de service" représentent tous les autres récepteurs électriques du véhicule autres que les récepteurs "moteur", comme les dispositifs d'éclairage et de signalisation, la climatisation, la radio, etc.

Les récepteurs "moteur" doivent être alimentés pendant la phase de démarrage du moteur, en même temps que le démarreur, et après l'arrêt du démarreur pendant toute la durée de fonctionnement du moteur, alors que les récepteurs "de service" nécessitent une alimentation de puissance variable indépendamment du fonctionnement du moteur.

Comme le montre la figure 9, qui est un schéma électrique général d'un dispositif selon l'invention, le démarreur 1 du moteur du véhicule est connecté à la batterie de démarrage 2 par l'intermédiaire du contacteur 60 actionné par la clef de contact du véhicule. Les récepteurs "moteur" 50 et "de service" 51 sont eux, à l'exception des récepteurs demeurant alimentés en permanence, connectés à l'alternateur 4 et à la batterie de service 3 par l'intermédiaire également du contacteur 60.

De plus un système de gestion de charge 61 coopérant avec des moyens appropriés de mesure de la charge des batteries 2 et 3 (soit par des moyens de mesure de la tension soit par des moyens de mesure du courant de récepteur ou de décharge et de la température des batteries), permet d'opérer la connexion sélective des récepteurs électriques 50 et 51 à la batterie de démarrage 2 et inversement d'opérer la connexion du démarreur 1 à la batterie de service 3 lorsque la batterie de démarrage 2 se trouve déchargée.

En raison du fort courant appelé par le démarreur 1, la batterie de démarrage 2 est préférentiellement placée près du démarreur, pour limiter la chute de tension dans les câbles de connexion, la batterie de service 3 pouvant être, elle, placée dans le compartiment moteur du véhicule, soit encore dans l'habitacle ou le coffre, selon les possibilités du véhicule.

Le système de gestion de charge 61 a plus particulièrement pour rôle lors du fonctionnement du circuit électrique de bord du véhicule en phase de dévers, c'est-à-dire lors que les récepteurs électriques 50 et 51 prélèvent plus de courant que ne peut fournir l'alternateur 4 et donc lorsque la batterie de service 3 se décharge, de connecter la batterie de démarrage 2 aux récepteurs et ce tant que l'état de charge de la batterie de démarrage demeure supérieur à un seuil déterminé. Toutefois, lorsque le moteur est arrêté, le système de gestion de charge 61 déconnecte de préférence la batterie de démarrage des récepteurs électriques pour éviter toute décharge de cette dernière.

Le système de gestion de charge 61 permet également d'alimenter le démarreur et de recharger la batterie de démarrage à partir de la batterie de service 3 et de l'alternateur 4, si la batterie de démarrage 2 se trouve déchargée.

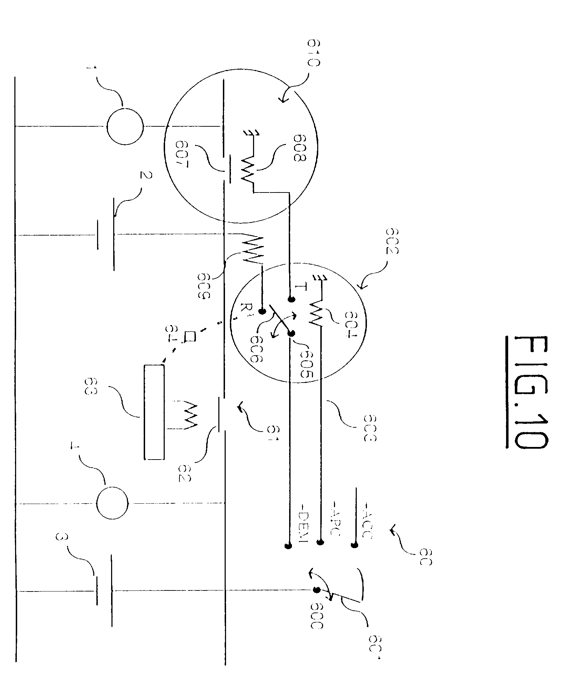

En se reportant à la figure 10, on voit comment est réalisé le contacteur de démarrage 60 pour permettre un fonctionnement optimal des batteries 2 et 3. Ce contacteur 60 comprend de façon classique un contact 601 relié à la borne d'entrée 600 du contacteur elle-même reliée à la borne + de la batterie de service 3. Ce contact 601 entraîné par la clef de contact est apte à venir successivement connecter à la borne d'entrée et donc à la batterie de service les différentes bornes de sortie du contacteur 60 : une borne de sortie +ACC à laquelle est reliée tout ou partie des récepteurs "de service" 51, une borne +APC reliée à l'ensemble des récepteurs "moteur" et "de service" et une borne +DEM permettant de commander de plus un interrupteur 610 à solénoïde contrôlant l'alimentation électrique du démarreur 1. Il est à noter que lorsque le contact 601 connecte la borne +DEM, la borne +APC est également connectée, de sorte que les récepteurs "moteur" puissent être alimentés lors du fonctionnement du démarreur.

Selon l'invention, le système de gestion 61 coopère avec un relais électromagnétique 602 interposé entre la borne +DEM du contacteur 60 et l'interrupteur à solénoïde 610 et des moyens de mesure de la tension 64 pour évaluer successivement la tension aux bornes de la batterie de démarrage 2 et de la batterie de service 3 lorsque le contacteur de démarrage 60 connecte sa borne d'entrée 600 à la borne de sortie +DEM, de façon à pouvoir alors opérer la connexion de la batterie de démarrage 2 à la batterie de service 3 lorsque cette dernière se trouve être déchargée et permettre ainsi le démarrage du moteur.

Le relais 602 comporte donc une borne d'entrée 605 reliée à la borne de sortie +DEM du contacteur 60 et deux bornes de sortie. Une première borne de sortie T qui est reliée au solénoïde 608 de l'interrupteur à solénoïde 610 contrôlant l'alimentation électrique du démarreur 1, et une seconde borne de sortie R qui est reliée à la batterie de démarrage 2 par l'intermédiaire d'une résistance 609 de valeur élevée adaptée. Une palette mobile 606 est apte à connecter sélectivement la borne d'entrée 605 à l'une ou l'autre des bornes de sorties T, R sous l'action antagoniste de moyens élastiques de rappel et d'une bobine 604. Les moyens élastiques de rappel opèrent la connexion de la seconde borne de sortie R du relais 602 à sa borne d'entrée 605 tant que la bobine 604 n'est pas traversée par un courant suffisant. La bobine 604 est, elle, reliée à la borne +APC du contacteur de démarrage 60.

Les moyens de mesure de la tension 64 sont reliés à la seconde borne de sortie R du relais 602 et fournissent donc en permanence la valeur de la tension à cette borne R à des moyens électroniques de contrôle 63 coopérant avec le système de gestion de charge pour opérer la fermeture d'un interrupteur 62 assurant la connexion des batteries entre elles suivant les valeurs prises par cette tension à la borne R.

Conformément à ce qui vient d'être décrit le fonctionnement du dispositif est le suivant. Deux cas sont à envisager suivant l'état de charge de la batterie de service 3.

Considérons tout d'abord le cas où la batterie de service est suffisamment chargée. Lorsque le contact 601 entraîné par la clef de contact passe en position +APC, le courant électrique alimentant la bobine 604 provoque le basculement de la palette mobile 606 opérant la connexion de la borne d'entrée du relais 602 à sa borne de sortie T, reliant alors le solénoïde 608 de l'interrupteur 610 à la borne +DEM du contacteur 60, il en résulte que lorsque le contact 601 connecte la borne +DEM, le courant électrique traversant le solénoïde 608 opère la fermeture du contact 609 et l'alimentation électrique du démarreur par la batterie de démarrage 2 et donc le lancement du moteur.

Dans le cas où la batterie de service se trouve insuffisamment chargée, lors de la connexion de la borne +APC par le contact 601, le courant traversant la bobine 604 est insuffisant pour déplacer la palette mobile 606 en position T à l'encontre de l'action antagoniste des moyens de rappel, ce dernier dans sa position de rappel, relie donc la borne de sortie R à la borne +DEM du contacteur 60. Il en résulte que lorsque le contact 601 connecte la borne +DEM, la tension électrique Vr de la borne R qui était jusqu'alors à la tension Vbd de la batterie de démarrage 2 (la borne +DEM étant ouverte) passe brusquement à la tension Vbs de la batterie de service 3, et ce du fait de la présence de la résistance 609. Cette brusque variation de tension observée grâce aux moyens de mesure 64 est alors détectée par les moyens électroniques de contrôle 63 qui décident alors suivant une stratégie adaptée d'opérer la fermeture de l'interrupteur 62 assurant la connexion des batteries entre elles. La batterie de démarrage 2 vient alors suppléer à la batterie de service 3 pour faire fonctionner le contacteur de démarrage 60. En effet, le courant issu de la batterie de démarrage traversant la bobine 604 opère le basculement de la palette 606 et la connexion de la borne T, ce qui permet le passage du courant à travers le solénoïde 608 et la fermeture du contact 607.

Ainsi grâce au dispositif qui vient d'être décrit il est possible de connecter sélectivement le contacteur de démarrage 60 à la batterie de démarrage 2 et d'opérer le démarrage du moteur quel que soit l'état de charge de la batterie de service 3, ce dispositif étant tout à la fois fiable, simple et peu onéreux à réaliser.

Plusieurs stratégies de fermeture de l'interrupteur 62 assurant la connexion des batteries entre elles peuvent être mises en oeuvres suivant le type de véhicule ou de moteur. Ainsi la fermeture peut être immédiate sitôt la transition de la tension à la borne R du relais 602 de la valeur Vbd à la valeur Vbs détectée, la coupure automatique de la connexion peut être opérée après une durée prédéterminée écoulée. Il est également possible de n'opérer la connexion des batteries entre elles que lorsque la borne de sortie +DEM du contacteur de démarrage 60 a été déconnectée, par exemple dans le cas de moteurs diesels si l'on souhaite que le conducteur ramène le contact 601 sur la borne +APC pour procéder au préchauffage avant de démarrer le moteur ; dans ce cas, il suffit d'attendre que la tension à la borne R redevienne Vbd pour procéder à la fermeture du contact 62 et à la connexion des batteries.

En se reportant aux figures 11 et suivantes, on a représenté différents modes de réalisation d'une seconde variante de réalisation du dispositif d'alimentation électrique d'un véhicule automobile à moteur thermique selon l'invention.

Selon cette variante, le dispositif d'alimentation électrique comprend une première batterie de démarrage B_{d}, dont le rôle est d'assurer le démarrage du moteur en fournissant de la puissance électrique au démarreur, et une seconde batterie de service Bₛ, distincte de la première et destinée à fournir de l'énergie électrique pour le fonctionnement du moteur. Il comprend également un alternateur-régulateur A relié au moteur et destiné à la charge des deux batteries associées à des moyens de mesure de leur état de charge, et un démarreur D du moteur connecté en parallèle à au moins une des batteries. Il comprend enfin un système de gestion de charge reliant les deux batteries B_{d} et Bₛ et l'alternateur à l'ensemble des charges électriques du véhicule.

Ces charges électriques sont alors regroupées en trois groupes :
- les charges dites de démarrage, qui sont indispensables pour assurer l'utilisation du véhicule, avant même le démarrage du moteur. Elles correspondent aux dispositifs anti-démarrage, aux serrures électriques, aux dispositifs de reconnaissance de clefs ou aux dispositifs antivol par exemple;
- les charges dites de service assurant le fonctionnement du moteur et la sécurité du véhicule. Elles correspondent au préchauffage dans le cas d'un moteur diesel, aux dispositifs électroniques de contrôle de l'allumage et de l'injection, aux dispositifs de freinage avec anti-blocage des roues;
- les charges électriques dites auxiliaires, correspondant aux fonctionnalités électriques de l'habitacle du véhicule, telles que le chauffage, le pare-brise et la lunette-arrière chauffants.

Ainsi selon cette variante de réalisation de l'invention, les charges électriques du véhicule ont été regroupées de façon particulière. Il n'est plus ici question de charges « moteur » mais de charge « de démarrage ».

Les charges moteur correspondent aux charges indispensables au bon fonctionnement du moteur comme l'allumage, la pompe à carburant ou encore les bougies de préchauffage pour les moteurs diesels. Les charges de démarrage sont celles qui sont indispensables à l'utilisation du véhicule. Parmi ces charges figurent donc le système de verrouillage-déverrouillage centralisé des portes ou encore le système d'anti-démarrage codé (tronspondeur, etc...).

Selon l'invention, la batterie de démarrage B_{d} est reliée aux charges de démarrage C_{d} indispensables à l'utilisation du véhicule, et la batterie de service Bₛ est reliée aux charges de service Cₛ assurant le fonctionnement du moteur et la sécurité du véhicule. De plus, le système de gestion de charge est constitué par deux interrupteurs bidirectionnels commandables R₁ et R₂, dont le premier R1 relie les deux batteries B_{d} et Bₛ, et dont le second R₂ relie les charges électriques auxiliaires Cₐ, au dispositif d'alimentation lui-même.

La figure 11 représente un premier mode de réalisation d'un dispositif d'alimentation selon cette seconde variante de l'invention, dans lequel le premier interrupteur R₁ bidirectionnel commandable relie un ensemble E₁, constitué par la batterie de démarrage B_{d} montée en parallèle avec le démarreur D et les charges de démarrage C_{d}, à la batterie de service Bₛ montée en parallèle avec les autres éléments du dispositif, soit l'alternateur A, les charges de service Cₛ et les charges auxiliaires Cₐ.

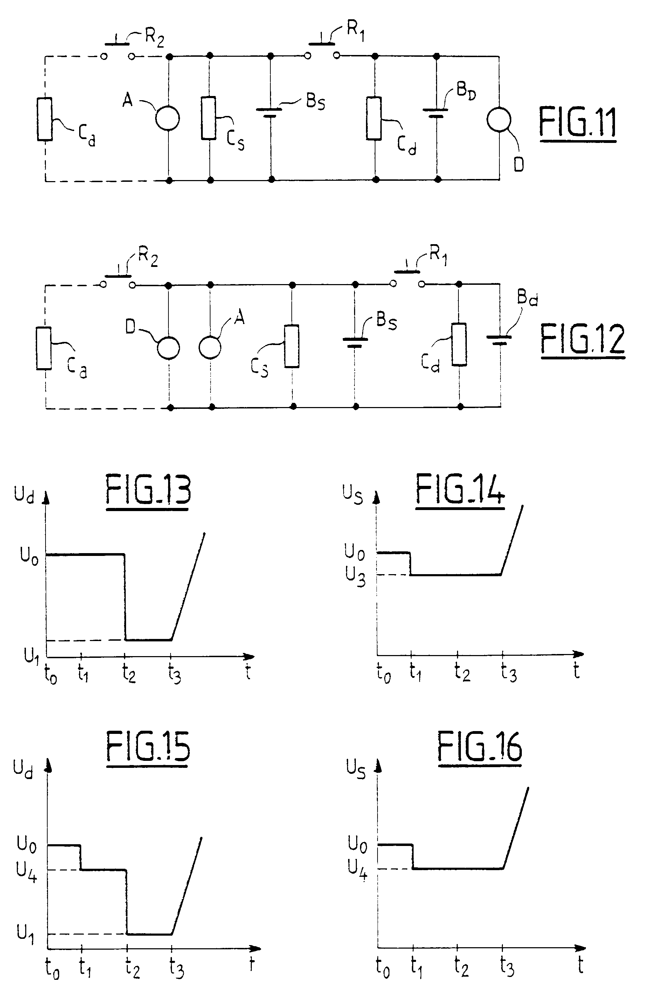

La figure 12 représente un second mode de réalisation d'un dispositif d'alimentation selon l'invention, dans lequel le premier interrupteur R₁ bidirectionnel commandable relie un autre ensemble E₂, constitué par la batterie de démarrage B_{d} montée en parallèle avec les charges de démarrage C_{d}, à la batterie de service Bₛ montée en parallèle avec le démarreur D, l'alternateur A, les charges de service Cₛ et les charges auxiliaires Cₐ.

Grâce au premier interrupteur R₁, l'alimentation des charges de démarrage C_{d}, qui autorise l'utilisation du véhicule automobile, est toujours assurée par la batterie de démarrage B_{d} à laquelle elle est reliée, quel que soit l'état de charge de la batterie de service Bₛ. Il est ainsi possible d'utiliser le véhicule et notamment d'y entrer, même si la batterie de service ne peut assurer le fonctionnement du moteur. Le second interrupteur R₂ permet de déconnecter les charges auxiliaires des autres éléments du dispositif d'alimentation.

L'utilisation d'un second relais R2 est donné à titre d'exemple de réalisation. Sa présence n'est toutefois pas indispensable d'où la représentation du circuit correspondant en pointillé sur les figures. En effet, son rôle est de permettre la diminution de l'énergie fournie par la batterie de démarrage et donc l'encombrement et la masse de cette dernière. Toutefois, l'emploi d'un tel relais peut dans certaines circonstances s'avérer inaproprié. Dans le cas où son emploi n'est donc pas envisagé, les charges auxiliaires sont prises en compte dans les charges de services.

L'information sur l'état de charges des deux batteries est donnée par des moyens de mesure de leur tension, ou par des moyens de mesure du courant de charge ou de décharge et de la température des batteries.

Dans les quatre procédés de commande du système de gestion, dont la description va suivre, l'utilisation du véhicule automobile est rendue possible car, quel que soit l'état des deux interrupteurs R₁ et R₂, les charges électriques de démarrage C_{d} sont connectées à la batterie de démarrage qui assure alors l'utilisation du véhicule, sauf si sa tension de charge est inférieure à un seuil déterminé.

Selon un premier procédé de commande, le fonctionnement du premier mode de réalisation du dispositif selon l'invention est le suivant.
- Pour le préchauffage d'un moteur diesel: le premier interrupteur R₁ est ouvert et le second R₂ est fermé, dans le cas où les deux batteries ont un état de charge correct. Dans le cas où la tension de charge de la batterie de service Bₛ est inférieure à un seuil déterminé Sₛ, c'est-à-dire qu'elle est trop déchargée pour assurer une bonne alimentation des charges de service nécessaires au préchauffage, le premier interrupteur R₁ est fermé pendant une temporisation, alors que le second interrupteur R₂ est ouvert pour limiter le courant fourni par la batterie de démarrage au réseau électrique. Cette temporisation évite que la batterie de démarrage ne se décharge dans le réseau, si le conducteur du véhicule ne lance pas d'action de démarrage.
- Au démarrage: le premier interrupteur R₁ est ouvert et le second R₂ est fermé, dans le cas où les deux batteries sont correctement chargées. Si la batterie de service est déchargée au-dessous du seuil déterminé Sₛ, le premier interrupteur R₁ est fermé et le second R₂ est ouvert. La commande est la même si la batterie de démarrage est déchargée.
- Pendant la phase de fonctionnement du moteur: le premier interrupteur R₁ est fermé, sauf dans le cas où la batterie de démarrage se décharge, si l'alternateur ne peut fournir assez de courant aux charges de démarrage. Le premier interrupteur R₁ est ouvert en cas de surcharge de la batterie de démarrage.

Ce premier procédé de commande des interrupteurs consiste à isoler le démarreur du moteur des autres charges électriques du véhicule, lorsque les deux batteries sont chargées, afin que la batterie de démarrage ne se décharge pas pendant le préchauffage et que les charges de service ne subissent pas une forte chute de tension pendant le démarrage. De plus, quand la batterie de démarrage n'est pas suffisamment chargée pour fournir le courant nécessaire au démarrage, la fermeture du premier interrupteur R₁ permet à l'énergie contenue dans la batterie de service de s'ajouter à celle de la batterie de démarrage pour assurer conjointement le démarrage.

Les figures 13 et 14 sont les courbes de variation respectivement de la tension U_{d} dite de démarrage, aux bornes des charges de démarrage C_{d} en fonction du temps t et de la tension Uₛ, dite de service, aux bornes des charges de service Cₛ en fonction du temps t. U₀ est la tension initiale aux bornes des charges de démarrage et de service avant le préchauffage, entre les instants t₀ et t₁. Lors de la phase de préchauffage, entre les instants t₁ et t₂, la tension de démarrage U_{d} ne chute pas et reste à la valeur de départ U₀, mais chute ensuite à une valeur inférieure U₁, lors du démarrage entre les instants t₂ et t₃. Lors du préchauffage, la tension de service Uₛ passe de la valeur U₀ à une valeur inférieure U₃, mais reste constante lors du démarrage.

Selon un second procédé de commande du système de gestion, le fonctionnement du premier mode de réalisation du dispositif selon l'invention est le suivant.
- Pendant la phase de préchauffage d'un moteur diesel: le premier interrupteur R₁ est fermé dès l'enclenchement des charges de préchauffage et le second interrupteur R₂ est fermé dans le cas des deux batteries correctement chargées. La tension aux bornes des charges de service est alors maximale. Une temporisation est associée à la commande de ce premier interrupteur. Mais si la batterie de service Bₛ a un état de charge inférieur au seuil déterminé Sₛ, l'interrupteur R₁ est fermé et l'interrupteur R₂ est ouvert pour limiter le courant fourni par la batterie de démarrage au réseau électrique du véhicule.
- Au démarrage du moteur : le premier interrupteur R₁ est ouvert et le second R₂ est fermé, dans le cas où les deux batteries sont correctement chargées. Si la batterie de service est déchargée au-dessous du seuil déterminé Sₛ, le premier interrupteur R₁ est fermé et le second R₂ est ouvert. La commande est la même si la batterie de démarrage est déchargée. Ainsi, la connexion des deux batteries optimise le niveau de tension aux bornes de charges de service, des charges de démarrage et du démarreur, selon les contraintes à satisfaire.

Les figures 15 et 16 sont les courbes de variation respectivement de la tension de démarrage U_{d} et de la tension de service Uₛ en fonction du temps, selon le second procédé de commande. Pendant le préchauffage, les tensions U_{d} et Uₛ sont maximales, égales à U₄, puis, lors du démarrage, les deux batteries étant séparées, les charges de service ne subissent pas la chute de tension U₁ due au démarreur, la tension de service restant à la valeur U₄.

Les deux procédés de commande qui vont suivre sont applicables aux deux modes de réalisation du dispositif d'alimentation selon la seconde variante de l'invention. Ainsi, selon un troisième procédé de commande, le fonctionnement du dispositif est le suivant.
- Pour le préchauffage d'un moteur diesel: le premier interrupteur R₁ est ouvert et le second R₂ est fermé, quand les deux batteries sont correctement chargées. Dans le cas où la batterie de service Bₛ est trop déchargée pour alimenter des charges de service nécessaires au préchauffage, le premier interrupteur R₁ est fermé pendant une temporisation, alors que le second interrupteur R₂ est ouvert pour limiter le courant fourni par la batterie de démarrage au réseau électrique.
- Au démarrage: le premier interrupteur R₁ est fermé afin que la batterie de service Bₛ participe au démarrage et le second interrupteur R₂ est fermé, dans le cas des deux batteries correctement chargées. Ainsi la tension aux bornes du démarreur est plus élevée car les deux batteries fonctionnent en parallèle sur le démarreur, ce qui facilite les démarrages dans des conditions difficiles. De plus, cela permet également de choisir une batterie de démarrage de plus petite taille car la batterie de service participe au démarrage quand elle est suffisamment chargée. Mais si la batterie de service Bₛ a un état de charge inférieur au seuil déterminé Sₛ, l'interrupteur R₁ est fermé pour assurer une bonne alimentation des charges de service nécessaires au démarrage et l'interrupteur R₂ est ouvert pour limiter le courant fourni par la batterie de démarrage au réseau.

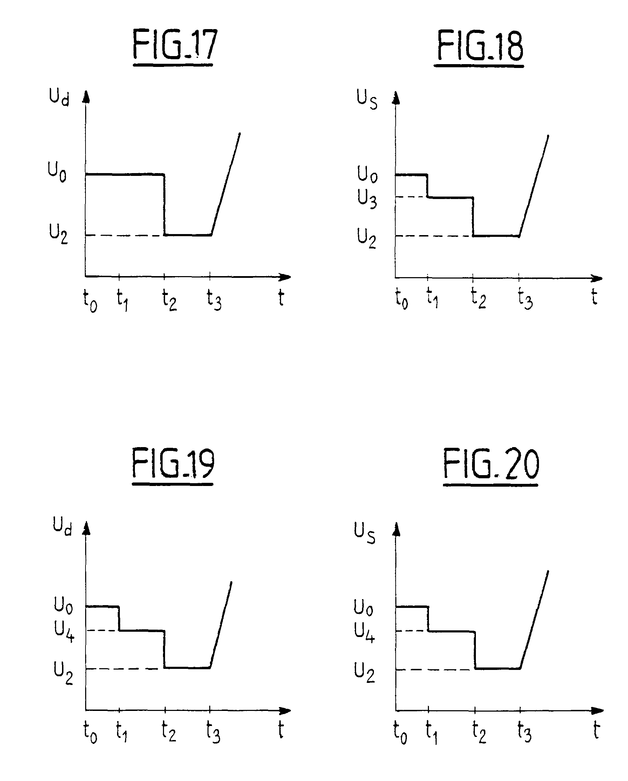

Sur la figure 17, qui est la courbe de variation de la tension de démarrage U_{d} en fonction du temps, selon ce troisième procédé de commande, on voit que la tension de démarrage U_{d} passe de la valeur initiale U₀ à une valeur inférieure U₂, qui est plus élevée que la valeur U₁, car les deux batteries fonctionnent en parallèle pendant le démarrage. Sur la courbe de variation de la tension de service Uₛ en fonction du temps (figure 18), on remarque que cette tension passe de la valeur initiale U₀ à la valeur inférieure U₃ pendant le préchauffage, puis à la valeur U₂, inférieure à U₃ lors du démarrage.

Selon un quatrième procédé de commande, le fonctionnement du dispositif est le suivant.
- Au préchauffage: le premier interrupteur R₁ est fermé dès l'enclenchement des charges de préchauffage, afin d'augmenter la tension aux bornes de ces charges et donc accroître leur efficacité, et le second interrupteur R₂ est fermé dans le cas des deux batteries correctement chargées. Une temporisation est associée à cette fermeture pour éviter une décharge de la batterie de démarrage dans le réseau, si le conducteur ne fait pas ensuite démarrer son véhicule. Mais si la batterie de service Bₛ a un état de charge inférieur au seuil déterminé Sₛ, l'interrupteur R₁ est fermé et l'interrupteur R₂ est ouvert.
- Au démarrage: le premier interrupteur R₁ est fermé et le second interrupteur R₂ est fermé dans le cas des deux batteries correctement chargées. Mais si la batterie de service Bₛ a un état de charge inférieur au seuil déterminé, l'interrupteur R₁ est fermé et l'interrupteur R₂ est ouvert.

Les figures 19 et 20 indiquent que la tension de démarrage U_{d} comme la tension de service Uₛ, varient de la valeur initiale U₀ à la valeur U₄, maximale pendant le préchauffage car les deux batteries sont en parallèles, avant de descendre à la valeur U₂ supérieure à U₁ lors du démarrage .

Pour ces quatre procédés, moteur tournant ou en roulage, le premier interrupteur R₁ est ouvert lorsque la batterie de démarrage peut fournir du courant au réseau. Quand cette dernière est chargée, c'est-à-dire qu'elle absorbe un courant inférieur à une valeur déterminée en fonction de la tension et de la température ambiante des batteries, l'interrupteur R₁ est ouvert pour éviter tout risque de surcharge. De plus, la fermeture du premier interrupteur R₁ est interdite en cas de dévers, quand l'alternateur ne peut fournir le courant nécessaire à son fonctionnement normal, pour que la batterie de démarrage reste toujours chargée en vue d'un prochain démarrage. Ce choix permet également de limiter le volume et la masse de la batterie de démarrage.

Les trois derniers procédés de commande permettent de maintenir un bon niveau de tension d'une part aux bornes des charges électriques du véhicule, selon la motorisation - essence ou diesel - et selon le type de charges variant en fonction du niveau d'équipement du véhicule et de la présence de charges spécifiques, et d'autre part aux bornes du démarreur pour faciliter le démarrage dans des conditions difficiles.

Le second mode de réalisation du dispositif d'alimentation fonctionne avec les deux derniers procédés de commande des interrupteurs du système de gestion, ce qui modifie peu le câblage du dispositif d'alimentation à une batterie réalisé actuellement sur les véhicules, dans lequel l'alternateur et la batterie sont reliés par l'intermédiaire du démarreur. Dans cette architecture, le premier interrupteur R₁ doit être choisi pour laisser passer le courant de démarrage, qui peut atteindre 400 ampères.

## Revendications

1. Dispositif d'alimentation des charges électriques d'un véhicule automobile à moteur thermique, comprenant un premier accumulateur d'énergie électrique dit batterie de démarrage (2) assurant le démarrage du moteur, un second accumulateur d'énergie électrique dit batterie de service (3) distincte de la première, un alternateur relié au moteur destiné à la charge des deux batteries (2,3) associées à des moyens de mesure de leur état de charge, et un système de gestion de charge reliant les deux batteries (2,3) et l'alternateur aux charges électriques du véhicule, caractérisé en ce que les charges électriques sont réunies en une pluralité de groupes distincts, chacun des groupes étant destiné à être alimenté électriquement de façon privilégiée par l'une des deux batterie (2,3) et en ce que le système de gestion de charge (6) est constitué par une combinaison d'au plus deux interrupteurs (T1, T2, T3).

2. Dispositif d'alimentation électrique d'un véhicule automobile à moteur thermique selon la revendication 1, caractérisé en ce que lesdits deux interrupteurs sont choisis parmi trois (T1, T2, T3), le premier (T1) reliant la première batterie de démarrage (2) et des charges moteur (50) représentant les éléments électriques assurant le fonctionnement du moteur et la sécurité du véhicule, le second (T2) reliant les charges moteur (50) et l'alternateur (4), et le troisième (T3) reliant l'alternateur (4) et la seconde batterie de service (3) qui est connectée de plus aux charges de service (51), représentant tous les autres éléments électriques du véhicule.

3. Dispositif d'alimentation électrique d'un véhicule automobile à moteur thermique selon la revendication 2, caractérisé en ce qu'il comporte un seul interrupteur (T2) placé entre l'alternateur (4) et les charges moteur (50) et constitué par une diode (8), bloquant la décharge de la première batterie de démarrage (2) dans les charges de services (51) du véhicule et dans la seconde batterie de service (3).

4. Dispositif d'alimentation électrique d'un véhicule automobile à moteur thermique selon la revendication 2, caractérisé en ce qu'il comporte un seul interrupteur (T1) reliant la première batterie de démarrage (2) aux charges moteur (50), ledit interrupteur (T1) étant un relais bidirectionnel (9) et commandable.

5. Dispositif d'alimentation électrique d'un véhicule automobile à moteur thermique selon la revendication 2, caractérisé en ce que l'interrupteur (T2) est commandable et unidirectionnel (7) de type transistor, bloquant la décharge de la première batterie de démarrage (2) dans les charges de service (51) du véhicule ainsi que dans la batterie de service (3).

6. Dispositif d'alimentation électrique d'un véhicule automobile à moteur thermique selon la revendication 2, caractérisé en ce qu'il comporte une combinaison de deux interrupteurs, un premier interrupteur (T1) reliant la première batterie de démarrage (2) aux charges moteur (50) et un second interrupteur (T2) placé entre les charges moteur (50) et l'alternateur (4).

7. Dispositif d'alimentation électrique d'un véhicule automobile à moteur thermique selon la revendication 2, caractérisé en ce que les deux interrupteurs (T1,T2) sont bidirectionnels et commandables, de type relais (10, 11).

8. Dispositif d'alimentation électrique d'un véhicule automobile à moteur thermique selon la revendication 1, caractérisé en ce que les charges moteur (50) sont connectées directement en parallèle à la première batterie de démarrage (2) et les charges de service (51) sont directement connectées en parallèle à la batterie de service (3), et en ce qu'il comporte une combinaison de deux interrupteurs, un premier interrupteur (T2) placé entre l'alternateur (4) et la première batterie de démarrage (2) et un second interrupteur (T3) placé entre l'alternateur et la seconde batterie de service (3).

9. Dispositif d'alimentation selon la revendication 9, caractérisé en ce que les deux interrupteurs (T2,T3) sont des diodes (12, 13), chacune étant respectivement passante de l'alternateur vers la batterie qu'elle relie.

10. Procédé de commande d'un dispositif d'alimentation des charges électriques d'un véhicule automobile à moteur, selon les revendications 2 à 9, caractérisé en ce que les charges moteur sont connectées en permanence à une des deux batteries (2,3), et en ce que, lors du fonctionnement du dispositif en phase de dévers pendant laquelle la seconde batterie de service (3) se décharge, la première batterie de démarrage (2) peut alimenter les charges moteur.

11. Procédé selon les revendications 4 et 7, caractérisé en ce que lors du fonctionnement du dispositif en phase de dévers pendant laquelle la seconde batterie de service (3) se décharge, la première batterie de démarrage (2) alimente les charges moteur, après mesure de son état de charge et comparaison avec un seuil minimum déterminé pour assurer un prochain démarrage.

12. Procédé selon l'une des revendications 4, 5, 7, et 9, caractérisé en ce qu'il comprend la déconnexion de la batterie de service (3) du démarreur pendant la phase de démarrage du moteur du véhicule.

13. Procédé selon l'une des revendications 4, 5, 7 et 10, caractérisé en ce qu'il comprend la connexion de la batterie de service (3) au démarreur pendant la phase de démarrage du moteur du véhicule, quand l'état de charge de la batterie de démarrage (2) est inférieur au seuil déterminé.

14. Procédé selon les revendications 4, 7 et 10, caractérisé en ce qu'il comprend la connexion de la batterie de démarrage aux charges moteur pendant la phase de démarrage du moteur du véhicule, quand l'état de charge de la batterie de service est inférieur au seuil déterminé.

15. Procédé selon les revendications 4 et 7, caractérisé en ce que, pendant la phase de charge de la batterie de démarrage (2) par l'alternateur, il comprend la déconnexion de la batterie de démarrage (2) de l'alternateur quand son seuil de charge est supérieur à un seuil déterminé.

16. Procédé selon l'une des revendications précédentes, caractérisé en ce qu'une élévation du seuil de tension d'un régulateur associé à l'alternateur est prévue pour compenser la chute de tension aux bornes des interrupteurs (T1, T2, T3), ou la chute de tension dans les câbles ou la différence d'acceptance de charge des batteries dues aux différences de température ambiante.

17. Dispositif d'alimentation électrique d'un véhicule automobile à moteur thermique selon l'une quelconque des revendications 1 à 9, caractérisé en ce qu'il comporte un contacteur de démarrage (60) actionné par la clef de contact, ledit contacteur possédant une borne d'entrée (600) reliée à ladite batterie de service (3) et au moins une première borne de sortie (+APC) alimentant lesdits autres récepteurs électriques (5) et une seconde borne de sortie (+DEM) alimentant notamment un interrupteur à solénoïde (610) contrôlant l'alimentation électrique du démarreur (1), et en ce que ledit système de gestion de charge (61) coopère avec des moyens de branchement électromagnétiques (602) et de mesure de la tension (64) permettant la mesure successive de la tension aux bornes de la batterie de démarrage (2) et de la batterie de service (3) lorsque ledit contacteur de démarrage (60) connectant ladite borne d'entrée (600) à ladite seconde borne de sortie (+DEM), de façon à opérer alors la connexion de la batterie de démarrage (2) à la batterie de service (3) lorsque ce dernier se trouve être déchargé et permettre ainsi le démarrage du moteur.

18. Dispositif d'alimentation électrique selon la revendication 17, caractérisé en ce que ledit système de gestion de charge (61) coopère avec des moyens contrôle (63) opérant ladite connexion pendant une temporisation prédéterminée.

19. Dispositif d'alimentation électrique selon l'une quelconque des revendications 17 à 18, caractérisé en ce que ledit système de gestion de charge (61) coopère avec des moyens contrôle (63) opérant ladite connexion après que ladite seconde borne de sortie (+DEM) à ladite batterie de démarrage (60) a été déconnectée de ladite borne d'entrée (600).

20. Dispositif d'alimentation électrique selon l'une quelconque des revendications 17 à 19, caractérisé en ce que lesdits moyens de branchement (602) sont formés par un relais électromagnétique comportant une borne d'entrée (605) reliée à ladite seconde borne de sortie (+DEM) dudit contacteur (60), une première borne de sortie (T) alimentant un ledit interrupteur à solénoïde (610) contrôlant l'alimentation électrique du démarreur (1), une seconde borne de sortie (R) reliée à ladite batterie de démarrage (2), une palette mobile (606) apte à connecter sélectivement ladite borne d'entrée (605) à l'une ou l'autre desdites bornes de sorties (T,R) sous l'action antagoniste de moyens élastiques de rappel et d'une bobine (604) destinée à être reliée à ladite batterie de service (3), et en ce que lesdits moyens de mesure de la tension (64) sont reliés à ladite seconde borne de sortie (R) du relais (602) connectée à la borne d'entrée (605) lorsque la palette mobile (606) n'est soumise qu'à l'action des moyens de rappel.

21. Dispositif d'alimentation électrique selon la revendication 20, caractérisé en ce que ladite bobine est reliée à ladite première borne (+APC) dudit contacteur de démarrage (60).

22. Dispositif d'alimentation électrique selon l'une quelconque des revendications 20 à 21, caractérisé en ce que ladite seconde borne de sortie (R) dudit relais (602) est reliée à ladite batterie de démarrage (2) par l'intermédiaire d'une résistance (609) de valeur adaptée.

23. Dispositif d'alimentation électrique d'un véhicule automobile à moteur thermique selon l'une quelconque des revendications de dispositif précédentes, caractérisé en ce que :
- la batterie de démarrage est reliée à des charges de démarrage indispensables à l'utilisation du véhicule;
- la batterie de service est reliée à des charges de service assurant le fonctionnement du moteur et la sécurité du véhicule;
- le système de gestion est constitué par au moins un interrupteur bidirectionnel commandable (R₁) reliant les deux batteries.

24. Dispositif d'alimentation électrique d'un véhicule automobile à moteur thermique selon la revendication 23, caractérisé en ce que le système de gestion est constitué par deux interrupteurs bidirectionnels commandables, dont le premier (R₁) relie les deux batteries et dont le second (R₂) relie des charges électriques auxiliaires, correspondant aux fonctionnalités électriques de l'habitacle du véhicule, au dispositif d'alimentation.

25. Dispositif d'alimentation électrique selon la revendication 24, caractérisé en ce que le premier interrupteur (R₁) bidirectionnel commandable relie un ensemble constitué par la batterie de démarrage (B_{d}) montée en parallèle avec le démarreur (D) et les charges de démarrage (C_{d}), à la batterie de service (Bₛ) montée en parallèle avec les autres éléments du dispositif.

26. Dispositif d'alimentation électrique selon la revendication 24, caractérisé en ce que le premier interrupteur (R₁) bidirectionnel commandable relie la batterie de démarrage (B_{d}) montée en parallèle avec les charges de démarrage (C_{d}), à la batterie de service (Bₛ) montée en parallèle avec le démarreur (D) et les autres éléments du dispositif.

27. Procédé de commande d'un dispositif d'alimentation des charges électriques d'un véhicule automobile selon la revendication 25, caractérisé en ce que,
- si la batterie de démarrage (B_{d}) et la batterie de service (Bₛ) ont un état de charge supérieur à un seuil déterminé, le premier interrupteur (R₁) est ouvert et le second interrupteur (R₂) est fermé, lors du préchauffage du moteur et lors du démarrage ;
- si l'état de charge de la batterie de service (Bₛ) est inférieur à un seuil déterminé, lors du préchauffage et lors du démarrage, le premier interrupteur (R₁) est fermé avec une temporisation, et le second interrupteur (R₂) est ouvert ;
- si l'état de charge de la batterie de démarrage (B_{d}) est inférieur à un seuil déterminé, le premier interrupteur (R₁) est fermé et le second interrupteur (R₂) est ouvert pendant le démarrage.

28. Procédé de commande selon la revendication 25, caractérisé en ce que :
- si la batterie de démarrage (B_{d}) et la batterie de service (Bₛ) ont un état de charge supérieur à un seuil déterminé, lors du préchauffage le premier interrupteur (R₁) est fermé avec une temporisation et le second interrupteur (R₂) est fermé, et lors du démarrage le premier interrupteur (R₁) est ouvert et le second interrupteur (R₂) est fermé ;
- si l'état de charge de la batterie de service (Bₛ) est inférieur à un seuil déterminé, le premier interrupteur (R₁) est fermé et le second interrupteur (R₂) est ouvert, lors du préchauffage et du démarrage ;
- si l'état de charge de la batterie de démarrage (B_{d}) est inférieur à un seuil déterminé, le premier interrupteur (R₁) est fermé et le second (R₂) est ouvert lors du démarrage.

29. Procédé de commande selon les revendications 25 ou 26, caractérisé en ce que :
- le premier interrupteur (R₁) est ouvert et le second interrupteur (R₂) est fermé lors du préchauffage et lors du démarrage ;
- si l'état de charge de la batterie de service (Bₛ) est inférieur à un seuil déterminé, le premier interrupteur (R₁) est fermé avec une temporisation et le second interrupteur (R₂) est ouvert lors du préchauffage et du démarrage.

30. Procédé de commande selon les revendications 25 ou 26, caractérisé en ce que :
- le premier interrupteur (R₁) est fermé avec une temporisation et le second interrupteur (R₂) est fermé lors du préchauffage et lors du démarrage ;
- si l'état de charge de la batterie de service (Bₛ) est inférieur à un seuil déterminé, le premier interrupteur (R₁) est fermé et le second interrupteur (R₂) est ouvert lors du préchauffage et du démarrage.
